# DEMANDE DE BREVET EUROPEEN

(11) **EP 2 477 303 A2**
(43) Date de publication de la demande: **18.07.2012**
(21) Numéro de dépôt: 11194337.9
(22) Date de dépôt: 19.12.2011
(51) Int. Cl.: H02J 7/00, A45F 3/04, B62M 6/90

(54) **Système d'alimentation électrique d'un véhicule léger**

(30) Priorité: 14.12.2010 FR 1060500
(71) Demandeur: MATRA MANUFACTURING & SERVICES, 75016 Paris (FR)
(72) Inventeur: Bonneville, Jacques, 77400 Lagny sur Marne (FR)
(74) Mandataire: Cabinet Plasseraud

(57) **Abrégé**

Système d'alimentation électrique d'un véhicule léger (10) muni d'un moteur électrique (9), comprenant un sac portable (1) contenant une batterie (4), un câble de connexion (5) pour relier de manière manuellement détachable la batterie au moteur électrique, un dispositif de connexion (6) permettant de relier la batterie à une source de courant extérieure, des moyens électroniques (3) aptes à contrôler le fonctionnement du moteur, un afficheur (2) pouvant être fixé de manière manuellement détachable au véhicule, un dispositif de surveillance (7) de l'état de la batterie apte à détecter une phase de recharge de la batterie et à émettre un signal indiquant la recharge de la batterie pour l'afficheur.

## Description

La présente invention se rapporte à un système d'alimentation électrique d'un véhicule léger muni d'un moteur électrique apte à fournir au moins une partie de la force de propulsion, comme par exemple un Vélo à Assistance Electrique (VAE). Il pourrait s'agir d'autres types de véhicule de taille plus ou moins importante, comme une patinette, un scooter ou encore un tricycle.

Plus particulièrement, l'invention se rapporte à un tel système d'alimentation électrique comprenant :
- un sac portable contenant une batterie apte à alimenter le moteur du véhicule, un câble de connexion au véhicule pour relier de manière manuellement détachable la batterie au moteur électrique pendant une phase d'utilisation du véhicule, et un dispositif de connexion permettant de relier la batterie logée dans le sac à une source de courant extérieure pendant une phase de recharge de ladite batterie ;
- des moyens électroniques de commande aptes à contrôler le fonctionnement du moteur et à délivrer un signal relatif au fonctionnement dudit moteur ; et
- un afficheur pouvant être fixé au véhicule, ledit afficheur étant apte à recevoir le signal relatif au fonctionnement du moteur et à afficher au moins une information relative au fonctionnement du véhicule à partir dudit signal.

Le fait de disposer la batterie dans un sac qui peut être emporté, et non pas sur le véhicule, permet de motoriser électriquement une plus grande variété de véhicule tel qu'une patinette comme cela est décrit dans le document EP1232938 A1 dans lequel il est prévu de placer la batterie d'alimentation du système de propulsion dans un sac à dos. Les progrès des batteries permettent d'alimenter des véhicules plus lourds avec une autonomie amplement suffisante pour un trajet. A titre indicatif une batterie de deux à trois kilos, permet aujourd'hui de conférer une autonomie de trente à cinquante kilomètres à un VAE et il est envisageable d'alimenter des véhicules plus lourds.

A ce jour, il n'est pas connu de réalisation concrète commercialisée d'un tel système. Mais les inventeurs pressentent que le fait de placer la batterie dans un sac aura essentiellement un avantage pratique permettant de favoriser les déplacements urbains à l'aide de véhicules électriques ou à assistance électrique. En effet, la batterie placée dans un sac sera très naturellement emmenée par l'utilisateur à son domicile ou sur son lieu de travail, lieux bien entendu équipés de prises électriques raccordées au réseau de distribution. Tandis que le véhicule qui reste souvent dans un espace public sera moins susceptible de vol ou de dégradation puisqu'un élément essentiel et onéreux ne sera plus présent.

Dans ce contexte, les inventeurs se sont fixés pour but d'augmenter encore le caractère pratique d'un système d'alimentation dans lequel la batterie est placée dans un sac, qu'il s'agisse d'un sac à dos, d'un sac porté en bandoulière ou encore d'un simple sac à poignées qui est placé dans un logement du véhicule prévu à cet effet pendant les phases d'utilisation, comme par exemple un panier porte-bagages.

A cet effet, la présente invention a pour objet un système du type précité **caractérisé en ce que** le sac comprend un dispositif de surveillance de l'état de la batterie apte à détecter une phase de recharge de la batterie et à émettre un signal indiquant la recharge de la batterie, et en ce que l'afficheur est fixé de manière manuellement détachable au véhicule et est apte à indiquer une phase de recharge de la batterie à réception du signal de recharge.

Ainsi lorsque l'utilisateur cesse d'utiliser le véhicule, il emmène naturellement le sac contenant la batterie. Il emmène aussi l'afficheur, ce qui est aussi naturel pour les personnes ayant l'habitude de laisser leur vélo dans un espace public, puisque tout comme pour un compteur de vitesse, l'afficheur est un élément relativement fragile pouvant craindre les intempéries et susceptible de vol. Comme on le verra par la suite, l'emport de l'afficheur peut rendre inintéressant le vol du vélo. En tout état de cause, la batterie et l'afficheur étant absents du vélo non utilisé, les risques de vol ou de dégradation de celui-ci sont diminués.

L'utilisateur emmène alors le sac et l'afficheur dans des locaux d'habitation, que ce soit son domicile ou son lieu de travail. Grâce aux dispositions de l'invention, il dispose des moyens nécessaires pour effectuer une recharge de la batterie sans avoir à sortir celle-ci du sac et tout en disposant d'un moyen de contrôle de la recharge de la batterie. Il est en effet important de s'assurer que la recharge a bien débuté et qu'il n'y a pas de mauvais contact à un niveau quelconque entre le secteur et la batterie.

Parmi les indications de recharge de la batterie, il s'agit donc au moins d'indiquer que la recharge est en cours. Mais il est aussi possible d'indiquer qu'une recharge complète ou un niveau de recharge partielle de la batterie est atteint. Il est alors aisé pour l'utilisateur de vérifier le niveau de charge de la batterie au moment où il reprend le sac à dos pour effectuer un nouveau trajet.

Comme on l'aura compris, l'utilisation d'un véhicule électrique équipé d'un tel système est bien plus aisée et rapide. En effet avec les VAE actuels pour palier l'absence de source de courant sur le lieu de parking du vélo, il est prévu de sortir le boîtier de batterie d'un logement prévu dans le cadre du vélo, logement qui est bien souvent peu accessible et nécessite l'utilisation d'une clé pour être déverrouillé.

L'utilisateur doit ensuite transporter à la main le boîtier de batterie, puis le connecter à des moyens de recharge. Ces moyens de recharge ne sont généralement pas intégrés au boîtier de batterie et rarement prévu pour indiquer un niveau de recharge. En effet, leur fonctionnement est souvent indiqué par une simple LED clignotante ou changeant de couleur.

Lorsque l'utilisateur veut reprendre le vélo, il doit effectuer les opérations inverses.

Dans des modes de réalisation préférés de l'invention, on peut avoir recours, en outre, à l'une ou l'autre des dispositions suivantes.

Le dispositif de surveillance de l'état de la batterie comporte un émetteur radio et l'afficheur comporte un récepteur radio, de sorte que le signal indiquant la recharge de la batterie est transmis à l'afficheur par une liaison sans fil. Cette disposition augmente notablement la souplesse d'utilisation du système. Par exemple, lors de la recharge, l'afficheur peut être placé de manière visible sur le sac ou dans une pochette transparente de celui-ci, mais aussi être placé en évidence sur un meuble, tandis que le sac est disposé dans un placard, voire une autre pièce.

L'afficheur comporte une source électrique interne rechargeable, ladite source interne étant rechargée pendant les phases d'utilisation et apte à alimenter l'afficheur en dehors des phases d'utilisation. Ainsi, l'utilisateur n'a uniquement qu'à recharger la batterie principale sans se soucier de vérifier qu'une pile ou une batterie de l'afficheur est correctement chargée.

En dehors des phases d'utilisation, le récepteur radio de l'afficheur est alimenté par intermittence pendant des périodes d'activation plus longues que l'émission d'un signal par le dispositif de surveillance de l'état de la batterie, qui sont séparées par des périodes d'inactivation de durée plusieurs fois supérieure aux périodes d'activation. Ainsi, l'afficheur peut rester fonctionnel pendant une longue période, par exemple un mois, malgré la nécessité de réception périodique d'informations pour remplir sa fonction d'indicateur et de contrôle charge de la batterie située à l'intérieur du sac.

Le dispositif de surveillance est apte à détecter une condition de fonctionnement anormal de la batterie et à émettre un signal d'alerte, l'afficheur étant apte à afficher un message d'alerte, et de préférence à émettre un signal sonore, dès réception du signal d'alerte.

La connexion entre le câble et le véhicule est assurée par un connecteur comprenant des moyens de retenue magnétiques garantissant la déconnexion du câble dès qu'une force de traction prédéterminée est exercée sur ce dernier. L'utilisation d'aimant permet d'ajuster précisément la force de déconnexion.

Le câble est connecté au véhicule dans une zone située sous et en arrière d'une selle du véhicule, ceci qui s'avère offrir un compromis intéressant entre l'ergonomie et la sécurité du système.

Le sac comporte un chargeur apte à charger la batterie et un cordon d'alimentation apte à relier ledit chargeur à une prise standard du réseau de distribution d'électricité, ledit cordon d'alimentation étant déployable à partir d'une poche de cordon du sac sans porter ledit chargeur du sac, ledit cordon d'alimentation étant déployable à partir d'une poche de cordon du sac sans sortir ledit chargeur du sac. Ainsi, le système est autonome et particulièrement pratique d'utilisation.

Le câble de connexion au véhicule est agencé dans une poche de câble située dans la partie inférieure du sac et à partir de laquelle son extrémité de connexion peut être sortie.

Le sac est un sac à dos et la poche de câble et la poche de cordon présentent chacune une ouverture agencée de part et d'autre du sac. Cette disposition s'avère pratique tout en préservant l'aspect esthétique du sac-à-dos.

Le sac présente une pochette extérieure présentant une fenêtre transparente et agencé de sorte que l'afficheur soit visible à travers ladite fenêtre, de sorte que l'utilisateur ne risque pas d'oublier l'afficheur tout en permettant un contrôle visuel de la recharge.

Par ailleurs, selon un autre aspect de l'invention, l'afficheur peut être adapté pour accepter l'introduction d'un code antivol, et le fonctionnement des moyens électroniques aptes à contrôler le fonctionnement du moteur peut être assujetti à la condition que l'utilisateur introduise le code antivol attendu au moyen de l'afficheur et que ledit afficheur envoie un signal correspondant vers les moyens électroniques aptes à contrôler le fonctionnement du moteur.

D'autres caractéristiques et avantages ressortiront de la description qui va suivre, donnée à titre d'exemple non limitatif, au regard des dessins dans lesquels :
- la figure 1 est une vue générale schématique du système selon l'invention lors de son utilisation sur un vélo à assistance électrique ;
- la figure 2 est une vue en perspective du sac de la Figure 1 avec une batterie, lors de la phase de recharge ;
- la figure 3 est un schéma de principe du système de la Figure 1 en phase d'utilisation sur un vélo à assistance électrique;
- la figure 4 est un schéma de principe du système de la Figure 1 an phase de recharge;
- la figure 5 est une vue de l'afficheur, et
- la figure 6 présente des chronogrammes de signaux relatifs à la liaison sans fil de l'afficheur.

Sur les différentes figures, de mêmes références désignent des éléments identiques ou similaires.

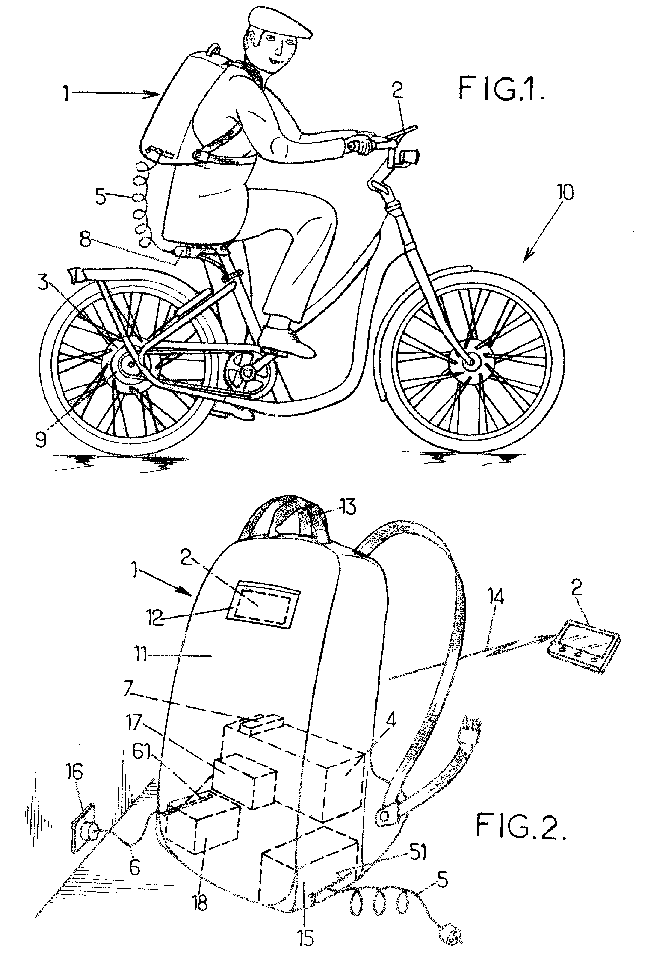

La figure 1 représente Vélo à Assistance Electrique (VAE) 10 en phase d'utilisation normale, ledit VAE étant équipé d'un système d'alimentation électrique pour véhicule léger selon l'invention, ainsi que d'un moteur électrique 9 apte à fournir au moins une partie de la force de propulsion.

Le moteur électrique 9 en question est dans l'exemple illustré situé dans le moyeu de la roue arrière, mais il pourrait aussi être positionné dans la roue avant ou au niveau du pédalier. De même, il pourrait y avoir non pas un seul moteur électrique d'assistance mais plusieurs moteurs.

Le système d'alimentation électrique selon l'invention comprend :
- un sac portable 1 contenant une batterie 4 apte à alimenter le moteur 9 du véhicule, le sac portable 1 en question pouvant être un sac-à-dos comme illustré ou tout autre type de sac comme mentionné plus haut ;
- un câble de connexion 5 au véhicule pour relier la batterie 4 au moteur électrique 9 pendant la phase d'utilisation normale du véhicule, le raccordement étant réalisé de manière manuellement détachable au moyen d'un connecteur 8 qui sera détaillé plus loin ;
- des moyens électroniques de commande 3, aussi appelé circuit de commande 3 de puissance, les dits moyens étant aptes à contrôler le fonctionnement du moteur 9, dans l'exemple illustré, ledit circuit de commande 3 de puissance étant situé dans le moyeu arrière au plus près du moteur électrique 9 ;
- un afficheur 2 pouvant être fixé de manière manuellement détachable au véhicule, dans la zone du guidon dans le cas du vélo 10 illustré, ledit afficheur 2 étant apte à recevoir un signal relatif au fonctionnement du moteur en provenance du circuit de commande 3 de puissance et ledit afficheur étant apte à afficher au moins une information relative au fonctionnement du véhicule à partir du signal relatif au fonctionnement du moteur.

En outre, comme illustré sur la Figure 2 qui montre la phase de recharge du système, le système d'alimentation électrique comprend un dispositif de connexion 6 permettant de relier la batterie 4 logée dans le sac à une source de courant extérieure pendant ladite phase de recharge de la batterie 4, au moyen d'une prise de courant standard 16.

La recharge s'effectue au travers d'un chargeur 17, qui peut le cas échéant être transporté dans le sac portable 1.

De plus, le sac du système d'alimentation électrique selon l'invention comprend un dispositif de surveillance 7 de l'état de la batterie 4 apte à détecter la phase de recharge de la batterie et à émettre un signal indiquant la recharge de la batterie, et/ou à transmettre un signal indiquant la recharge de la batterie à destination de l'afficheur 2. Ce dispositif de surveillance 7 peut être juxtaposé à la batterie 4, ou peut même être intégré à la batterie.

Par ailleurs, le sac portable 1 comprend une poche de cordon 18 permettant de déployer ledit cordon d'alimentation 6 à partir de ladite poche 18, en particulier sans sortir ledit chargeur 17 du sac.

Il est également prévu une poche de câble 15 à partir de laquelle le câble 5 et en particulier une extrémité 8a de connexion de ce câble 5 peuvent être sortis et déployés pour raccorder ladite extrémité 8a à la portion de câble 50 allant vers le moteur 9.

Ladite poche de cordon 18 et ladite poche de câble 15 sont de préférence agencées dans la partie inférieure du sac portable 1. Selon un exemple préféré tel qu'illustré, le sac portable est un sac à dos et ladite poche de câble 15 et ladite poche de cordon 18 présentent chacune une ouverture (51,61) agencées de part et d'autre du sac.

De plus, le sac portable 1 comprend une enveloppe 11 textile ou synthétique et des moyens de maintien 13 comme des poignées, sangles et attaches.

En outre le sac portable 1 peut être équipé d'une pochette extérieure 12 pour recevoir l'afficheur 2, ladite pochette 12 présentant une fenêtre transparente de sorte que l'afficheur 2 rangé à l'intérieur soit visible à travers ladite fenêtre transparente.

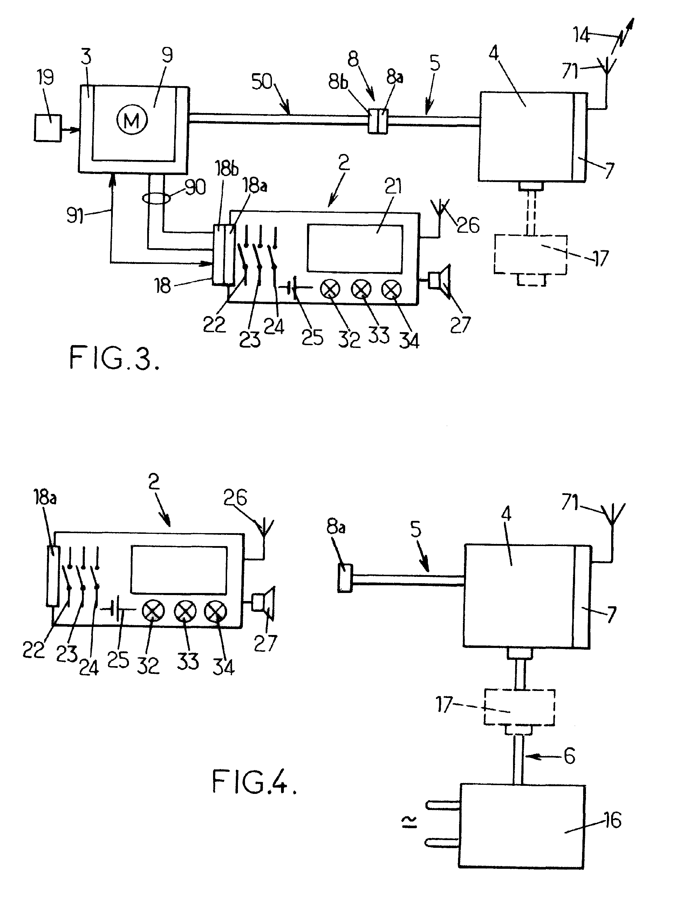

Comme illustré sur la Figure 3, le moteur électrique 9 est équipé des moyens électroniques de commande 3 qui utilisent une information de vitesse et/ou couple délivrée par un capteur de vitesse et/ou couple 19.

La liaison électrique entre les moyens électroniques de commande 3 du moteur 9 et la batterie 4 comprend :
- le câble de connexion 5 relié à la batterie et qui peut être rangé dans la poche de câble 15,
- une portion de câble 50, installée à demeure sur le véhicule et reliée aux moyens électroniques de commande 3 du moteur 9,
- un connecteur 8 comprenant une partie détachable 8a solidaire du câble de connexion 5 et une partie restant liée au véhicule 8b, chacun contenant des contacts électriques mâle ou femelle.

Avantageusement selon l'invention, les deux parties 8a, 8b sont maintenues l'un contre l'autre par des moyens de retenue magnétique, comme des aimants permanents ; ceci permet d'éviter que les vibrations subies par le véhicule ne conduisent à une déconnexion intempestive du connecteur 8, et ceci permet également de déconnecter le connecteur 8 très facilement par une traction sur le câble 5 dès lors que la traction exercée est supérieure à la force magnétique.

De préférence, et comme ceci est illustré à la Figure 1, la connexion 8 est agencée dans une zone située sous et en arrière de la selle du véhicule.

En référence aux Figures 3 et 4, le dispositif de surveillance 7 de l'état de la batterie 4 comporte un émetteur radio 71 et l'afficheur 2 comporte un récepteur radio 26, de sorte que le signal indiquant la recharge de la batterie est transmis à l'afficheur par une liaison sans fil 14.

En phase d'utilisation (cf. Figure 3), l'afficheur 2 est relié par une connexion électrique 90,91 aux moyens électroniques de commande 3 du moteur 9, ladite connexion comprenant une alimentation électrique 90 destinée à alimenter l'afficheur 2 pendant la phase d'utilisation, et une liaison série 91 permettant un échange d'information entre l'afficheur 2 et les moyens électroniques de commande 3 du moteur 9. Un connecteur détachable 18 permet de raccorder l'afficheur 2 au câble 90,91. Ce connecteur détachable 18 comprend une partie détachable 18b solidaire du câble de connexion 90,91 et une partie 18a restant liée à l'afficheur, chacun contenant des contacts électriques mâle ou femelle. Des moyens de retenue magnétique similaires à ceux décrits précédemment pour le connecteur 8 peuvent être prévus.

En particulier, les moyens électroniques de commande 3 du moteur 9 délivrent périodiquement en phase d'utilisation un ou plusieurs signaux relatifs au fonctionnement du moteur 9 à destination de l'afficheur 2. De même, en sens inverse, l'afficheur 2 peut envoyer des commandes de sélection de mode à destination des moyens électroniques de commande 3 du moteur 9, ou une autorisation soumise à l'introduction d'un code antivol.

En phase de recharge, l'afficheur 2 n'est plus alimenté par l'alimentation électrique 90, et utilise alors une source électrique interne rechargeable 25, de type accumulateur rechargeable. Ladite source interne 25 est rechargée pendant les phases d'utilisation par l'alimentation électrique 90 filaire et alimente seule l'afficheur 2 en dehors des phases d'utilisation.

En référence aux Figures 3 à 5, l'afficheur comprend, outre la source électrique interne rechargeable 25 et le récepteur radio 26 déjà mentionnés :
- un écran d'affichage ou 'display' 21, de préférence à cristaux liquides de type LCD, permettant d'afficher plusieurs informations relatives au fonctionnement du véhicule comme l'état de charge de la batterie 21a, la vitesse d'avancement 21b, le totalisateur kilométrique 21c, le mode d'assistance électrique 21d, ces informations pouvant bien sur être complétées par tout autre information ;
- des contacteurs 22,23,24 permettant en particulier de sélectionner le mode d'assistance électrique souhaité, avec une assistance plus ou moins soutenue, de mettre en marche ou éteindre le système, de mettre en marche ou éteindre l'éclairage du vélo ;
- des voyants 32,33,34 permettant d'afficher le mode sélectionné, en complément des informations données sur le display 21 ;
- un buzzer 27 adapté pour générer un signal sonore.

Il est à noter que certains des contacteurs 22,23,24 peuvent être combinés avec un des voyants 32,33,34 correspondants, de sorte sur les contacteurs contiennent avantageusement le feed-back de la fonction activée.

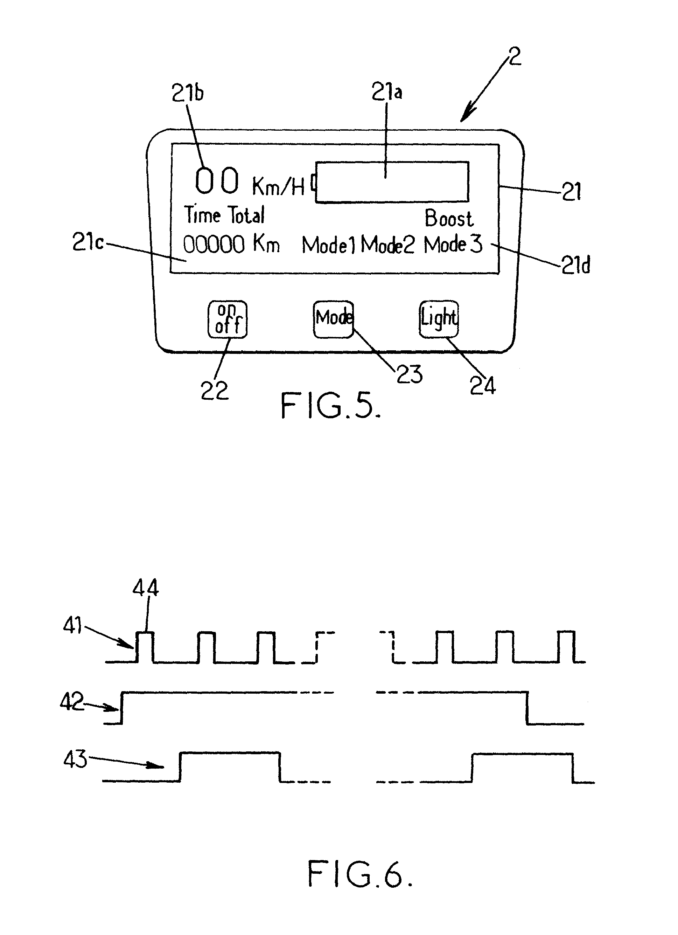

La figure 6 illustre le fonctionnement de l'afficheur 2 quant à la surveillance de réception des messages en provenance du dispositif de surveillance 7 de l'état de la batterie 4. En phase d'utilisation, l'afficheur 2 est alimenté par l'extérieur (câble 90) et donc le récepteur 26 est activé en permanence selon le chronogramme 42 de la figure 6, ce qui lui permet de recevoir chacun des messages 44 transmis par l'émetteur 71, selon le chronogramme 41 illustré.

Mais, avantageusement selon l'invention, hors phase d'utilisation, le récepteur radio 26 de l'afficheur 2 est activé seulement par intermittence (cf. chronogramme 43) pendant des périodes d'activation plus longues que la période d'émission d'un signal 44 par le dispositif de surveillance 7 de l'état de la batterie (cf. chronogramme 41). Les périodes d'activation sont séparées par des périodes d'inactivation d'une durée plusieurs fois supérieure aux périodes d'activation.

De plus, le dispositif de surveillance 7 est apte à détecter une condition de fonctionnement anormal de la batterie 4 et à émettre un signal d'alerte. L'afficheur 2 va alors afficher ce message d'alerte, et va de préférence émettre un signal sonore au moyen du buzzer 27, dès réception du signal d'alerte.

Il est à noter que la prise 16 apte à être enfiché dans un socle du réseau alternatif standard peut comprendre le chargeur 17, auquel cas la prise intégrant le chargeur est reliée directement à la batterie 4.

Par ailleurs, l'afficheur 2 peut être adapté pour accepter l'introduction d'un code antivol qui a été préalablement mémorisé, et le fonctionnement des moyens électroniques de commandes 3 peut être assujetti à la condition que l'utilisateur du vélo introduise le code antivol attendu au moyen de l'afficheur 2. Par exemple, ceci peut être réalisé au moyen des contacteurs 22,23,24 et du display qui commence par afficher un code par défaut par exemple '000' ; selon un mode spécial 'introduction du code' de l'afficheur, un des contacteurs 22,23,24 peut être utilisé pour incrémenter un digit, un autre pour décrémenter le digit, et le troisième pour passer d'un digit à l'autre. Lorsque l'utilisateur valide le code et que celui-ci correspond au code mémorisé et attendu, l'afficheur 2 envoie un signal correspondant vers les moyens électroniques de commande 3 du moteur, pour autoriser le fonctionnement normal du moteur 9. Si le code est erroné, l'afficheur 2 envoie un autre signal correspondant vers les moyens électroniques de commande 3 du moteur 9, pour empêcher leur fonctionnement normal et rendre ainsi l'assistance électrique du VAE inutilisable.

## Revendications

1. Système d'alimentation électrique d'un véhicule léger (10) muni d'un moteur électrique (9) apte à fournir au moins une partie de la force de propulsion, comprenant :
un sac portable (1) contenant une batterie (4) apte à alimenter le moteur du véhicule, un câble de connexion (5) au véhicule pour relier de manière manuellement détachable la batterie au moteur électrique pendant une phase d'utilisation du véhicule, et un dispositif de connexion (6) permettant de relier la batterie logée dans le sac à une source de courant extérieure pendant une phase de recharge de ladite batterie ;
des moyens électroniques de commande (3) aptes à contrôler le fonctionnement du moteur et à délivrer un signal relatif au fonctionnement dudit moteur ; et
un afficheur (2) pouvant être fixé au véhicule, ledit afficheur étant apte à recevoir le signal relatif au fonctionnement du moteur et à afficher au moins une information relative au fonctionnement du véhicule à partir dudit signal,
**caractérisé en ce que** le sac comprend un dispositif de surveillance (7) de l'état de la batterie apte à détecter une phase de recharge de la batterie et à émettre un signal indiquant la recharge de la batterie,
**et en ce que** l'afficheur est fixé de manière manuellement détachable au véhicule et est apte à indiquer une phase de recharge de la batterie à réception du signal de recharge.

2. Système d'alimentation selon la revendication 1, dans lequel le dispositif de surveillance (7) de l'état de la batterie comporte un émetteur radio (71) et dans lequel l'afficheur comporte un récepteur radio (26), de sorte que le signal indiquant la recharge de la batterie est transmis à l'afficheur par une liaison sans fil (14).

3. Système d'alimentation selon la revendication 1 ou 2, dans lequel l'afficheur (2) comporte une source électrique interne rechargeable (25), ladite source interne étant rechargée pendant les phases d'utilisation et apte à alimenter l'afficheur en dehors des phases d'utilisation.

4. Système d'alimentation selon la revendication 2 ou 3, dans lequel en dehors des phases d'utilisation, le récepteur radio (26) de l'afficheur est alimenté par intermittence pendant des périodes d'activation plus longues que l'émission d'un signal par le dispositif de surveillance de l'état de la batterie, qui sont séparées par des périodes d'inactivation de durée plusieurs fois supérieure aux périodes d'activation.

5. Système d'alimentation selon l'une quelconque des revendications précédentes, dans lequel le dispositif de surveillance (7) est apte à détecter une condition de fonctionnement anormal de la batterie et à émettre un signal d'alerte, l'afficheur étant apte à afficher un message d'alerte, et de préférence à émettre un signal sonore, dès réception du signal d'alerte.

6. Système d'alimentation selon l'une quelconque des revendications précédentes, dans lequel la connexion entre le câble (5) et le véhicule est assurée par un connecteur (8) comprenant des moyens de retenue magnétique garantissant la déconnexion du câble dès qu'une force de traction prédéterminée est exercée sur ce dernier.

7. Système d'alimentation selon l'une quelconque des revendications précédentes, dans lequel le câble (5) est connecté au véhicule dans une zone située sous et en arrière d'une selle du véhicule.

8. Système d'alimentation selon l'une quelconque des revendications précédentes, dans lequel le sac comporte un chargeur (17) apte à charger la batterie et un cordon d'alimentation (6) apte à relier ledit chargeur à une prise standard (16) du réseau de distribution d'électricité, ledit cordon d'alimentation étant déployable à partir d'une poche de cordon (18) du sac sans sortir ledit chargeur du sac.

9. Système d'alimentation selon l'une quelconque des revendications précédentes, dans lequel le câble (5) de connexion au véhicule est agencé dans une poche de câble (15) située dans la partie inférieure du sac et à partir de laquelle son extrémité de connexion peut être sortie.

10. Système d'alimentation selon la revendication 8 et la revendication 9, dans lequel le sac est un sac à dos et dans lequel la poche de câble (15) et la poche de cordon (18) présentent chacune une ouverture agencée de part et d'autre du sac.

11. Système d'alimentation selon l'une quelconque des revendications précédentes, dans lequel le sac présente une pochette extérieure (12) présentant une fenêtre transparente et agencé de sorte que l'afficheur (2) soit visible à travers ladite fenêtre.
